(19) Europäisches Patentamt
European Patent Office
Office européen des brevets

(11) **EP 4 679 822 A1**

(12) **EUROPEAN PATENT APPLICATION**

(43) Date of publication:
**14.01.2026 Bulletin 2026/03**

(21) Application number: **24306288.2**

(22) Date of filing: **31.07.2024**

(51) International Patent Classification (IPC):
**H04N 19/11** (2014.01)    **H04N 19/147** (2014.01)
**H04N 19/593** (2014.01)

(52) Cooperative Patent Classification (CPC):
**H04N 19/593; H04N 19/105; H04N 19/11;
H04N 19/147**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.07.2024 EP 24306141**

(71) Applicant: **Beijing Xiaomi Mobile Software Co.,
Ltd.
Beijing 100085 (CN)**

(72) Inventors:
- **GHAZNAVI YOUVALARI, Ramin
Beijing 100085 (CN)**
- **ABDOLI, Mohsen
Beijing 100085 (CN)**
- **TISSIER, Alexandre
Beijing 100085 (CN)**

(74) Representative: **RVDB Rennes
44 rue Lariboisière
35235 Thorigné-Fouillard (FR)**

(54) **ENCODING/DECODING VIDEO PICTURE DATA**

(57)    The present disclosure relate to prediction of blocks of a video. For a current block of video picture, coded in any mode, the present invention calculates a list of at least one RIPM based on reconstructed samples of said current block. The list of the at least one RIPM is then stored in memory and is used for coding future blocks in the video for example through MPM or OBIC modes. So, the calculated RIPMs for the current block are not changing the sample reconstruction of the current block but rather making the coding of future blocks to be more efficient.

Fig. 18

EP 4 679 822 A1

**Description**

<u>FIELD</u>

The present application generally relates to video picture encoding and decoding. Particularly, but not exclusively, the technical field of the present application is related to recalculation of intra prediction modes for coding a current block of a video picture.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

Current video compression standards or recommendations derive intra coding modes for a current block to be coded based on a Rate-distortion optimization of residual calculated between the current block and a prediction block derived based on already coded blocks in a causal neighborhood of the current block.

One of the problems is to improve the performance of the prediction of the current block of the current video compression standards and recommendations.

The intra prediction modes (IPMs) which are used for coding a block are usually not very accurate due to reasons such as:

- IPMs are estimating the texture pattern within the block using the reference samples from the block neighbourhood which may not fully represent the actual texture pattern within the block;
- Signalling overhead of the intra prediction modes may impact encoder's decision for selecting a less accurate IPM with lower signalling cost than a more accurate IPM with higher signalling cost.

Moreover, there are many prediction tools that do not rely on regular IPMs in their prediction process. For example, inter prediction tools, intra block copy tools, etc.

The above-mentioned issues cause inefficiencies for intra prediction of a future block that may rely on intra prediction modes of the previously coded blocks. For example, the MPM list of a block collects IPMs of the neighbouring blocks, or the occurrence-based intra coding (OBIC) tool uses neighbouring IPMs for building an histogram of occurrences. Thus, when the inaccurate IPMs are used from previously coded blocks, it may result in sub-optimal intra prediction performance of the future blocks.

<u>SUMMARY</u>

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of calculating at least one regular intra prediction mode for coding at least one future block of a current block of a video picture, comprising obtaining reconstructed block of the current block; and determining a list of the at least one regular intra-prediction mode, called a second list of at least one recalculated RIPMs, based on the reconstructed block.

According to a second aspect of the present application, there is provided a method of calculating at least one regular intra prediction mode for decoding at least one future block of a current block of a video picture, comprising obtaining reconstructed block of the current block; and determining a list of the at least one regular intra-prediction mode, called a second list of at least one recalculated RIPM, based on the reconstructed block.

In some embodiments, the determining the second list of the at least one recalculated RIPM comprises:

- defining a first list of RIPMs for the reconstructed block;
- testing each current RIPM of the first list of RIPMs by:

  - obtaining a prediction block by predicting the reconstructed block based on the current RIPM;
  - calculating a distortion cost associated with the current RIPM based on the reconstructed block and a prediction block obtained for the current RIPM;

- sorting the first list of RIPMs based on the distortion costs associated with the RIPMs of the first RIPMs; and
- obtaining the second list of the at least one recalculated RIPM by selecting at least one first RIPM from the sorted first list of RIPMs.

In some embodiments, the first list of RIPMs comprises a subset of RIPMs of all RIPMs that could be used for predicting the current block.

In some embodiments, the subset of RIPMs depends on one characteristic of the current block.

In some embodiments, the current block being predicted using at least one RIPM and wherein the subset of RIPMs includes said at least one RIPM and surrounding, in terms of mode index, RIPMs of each of said at least one RIPM, each surrounding RIPM of each RIPM being identified by an index equal to a sum of an index identifying said RIPM and an offset value.

In some embodiments, the subset of RIPMs depend on texture information extracted from the reconstructed block and of all the RIPMs that could be used for predicting the current block.

In some embodiments, the first list of RIPMs depends on residual energy of the current block that depends on a residual block calculated by subtracting a prediction block corresponding to one RIPM used for predicting the current block from the signal of the current block.

In some embodiments, the residual energy of the current block is computed in the pixel-domain or the transform-domain.

In some embodiments, if the residual energy of the current block is smaller than a threshold or if the transform coefficients associated with the residual block of a current block are smaller than a threshold, obtaining the second list of at the least one recalculated RIPM for that current block is skipped.

In some embodiments, the number of RIPMs in the first list of RIPMs depends on the residual energy of the current block.

In some embodiments, the second list of the at least one RIPM is obtained based on maximum difference between maximum and minimum distortion costs associated with the at least one recalculated RIPM.

In some embodiments, a maximum number of recalculated RIPMs in the second list of the at least one recalculated RIPM is fixed or depends on one characteristic of the current block.

In some embodiments, testing or not testing the surrounding RIPMs of a current RIPM of the first list of RIPMs depends on a comparison between the distortion cost associated with the current RIPM and a minimum distortion cost associated with a recalculated RIPM of the second list of the at least one recalculated RIPM.

In some embodiments, the reconstructed block is resampled or sub-sampled and testing a current RIPM of the first list of RIPMs is based on resampled or sub-sampled reconstructed block.

In some embodiments, testing a current RIPM of the first list of RIPMs is based on a subset of samples of the reconstructed block.

In some embodiments, one future block of the current block is coded or decoded based on one Occurrence-based Intra Coding mode , called OBIC mode, determining an occurrence list of RIPMs, each RIPM being associated with an occurrence weight representing use frequency of said RIPM for coding or decoding at least one neighboring block in a causal neighborhood of the future block.

In some embodiments, the occurrence list comprise RIPMs calculated from the future block and/or the at least one recalculated RIPMs of the second list of the at least one recalculated RIPM.

In some embodiments, deciding whether or not the occurrence list comprises the at least one recalculated RIPMs of the second list of the at least one recalculated RIPM depends on characteristic of the future block or distances, in terms of number of pixel, of the neighboring blocks to the future block.

In some embodiments, when a first value of an indicator indicates a first OBIC mode using the at least one recalculated RIPMs of the second list of the at least one recalculated RIPM, a second value of the indicator indicates a second OBIC mode using RIPMs calculated from the future block and a third value of the indicator indicates a third OBIC mode using both the at least one recalculated RIPMs of the second list of the at least one recalculated RIPM and the RIPMs calculated from the future block, then the indicator is signaled in a bitstream and the decoder determines associations between the indicator value signaled and the three OBIC modes based on a template cost calculated for each OBIC mode.

According to a third aspect of the present application, there is provided an apparatus comprising means for performing one of the methods according to the first and/or second aspect of the present disclosure.

According to a fourth aspect of the present application, there is provided a computer program product including instructions which, when the program is executed by one or more processors, causes the one or more processors to carry out a method according to the first and/or second aspect of the present application.

According to a fifth aspect of the present application, there is provided a non-transitory storage medium carrying instructions of program code for executing a method according to the first and/or second aspect of the present application.

EP 4 679 822 A1

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC.

**Figure 2** shows an example of partitioning coding units into prediction units in accordance with HEVC.

**Figure 3** shows an example of a CTU division in accordance with VVC.

**Figure 4** shows examples of split modes supported in the multi-type tree partitioning in accordance with VVC.

**Figure 5** shows a schematic block diagram of a method 100 of encoding a video picture VP in accordance with prior art.

**Figure 6** shows a schematic block diagram of a method 200 of decoding a video picture VP in accordance with prior art.

**Figure 7** illustrates a examples of a ROI for LFNST16.

**Figure 8** illustrates a examples of a ROI for LFNST8.

**Figure 9** illustrates an example of a table of mapping of intra prediction modes to LFNST set index.

**Figure 10** illustrates an overview of NSPTs among existing LFNSTs;

**Figure 11** illustrates an example of context modeling LFNST/NSPT coefficients;

**Figure 12** illustrates an example of virtual intra prediction mode derivation for MIP.

**Figure 13** shows an example of casual neighborhood according to some embodiments of the present disclosure.

**Figure 14** shows an example of the occurrence list.

**Figure 15** shows an example of deriving at least one pair of identifier and individual occurrence weight for each eligible neighboring block.

**Figure 16** illustrates a schematic block diagram of steps of a method 300 for recalculating at least one RIPM of a current block for coding at least one future block of the current block of a video picture according to some embodiments of the present disclosure.

**Figure 17** illustrates a schematic block diagram of steps of a method 300 for recalculating at least one RIPM for decoding at least one future block of a current block of the current block of a video picture according to some embodiments of the present disclosure.

**Figure 18** illustrates a schematic block diagram of steps of a method 500 for recalculating RIPMs of a current block from its reconstructed samples according to some embodiments of the present disclosure.

**Figure 19** illustrates an example for defining the first list of RIPMs for the reconstructed block RB using DIMD according to some embodiments of the present disclosure.

**Figure 20** illustrates an example of virtual block based on a block according to some embodiments of the present disclosure.

**Figure 21** shows a block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspect relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en), VVC (ISO/IEC 23090-3 Versatile Video Coding, ITU-T Recommendation H.266, https://www.itu.int/rec/T-REC-H.266-202008-I/en), ECM (Algorithm description of Enhanced Compression Model 10 (ECM 10), JVET-AE2025, Geneva, 11-19 July 2023) but may be applied to other standards and recommendations such as AV1 (AOMedia Video 1, http://aomedia.org/av1 /specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

In the state-of-the-art video compression systems such as HEVC or VVC low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH**=128). A default CTU size (height, width) is encoded into the bitstream, for example at a sequence level in the Sequence Parameter Set (SPS).

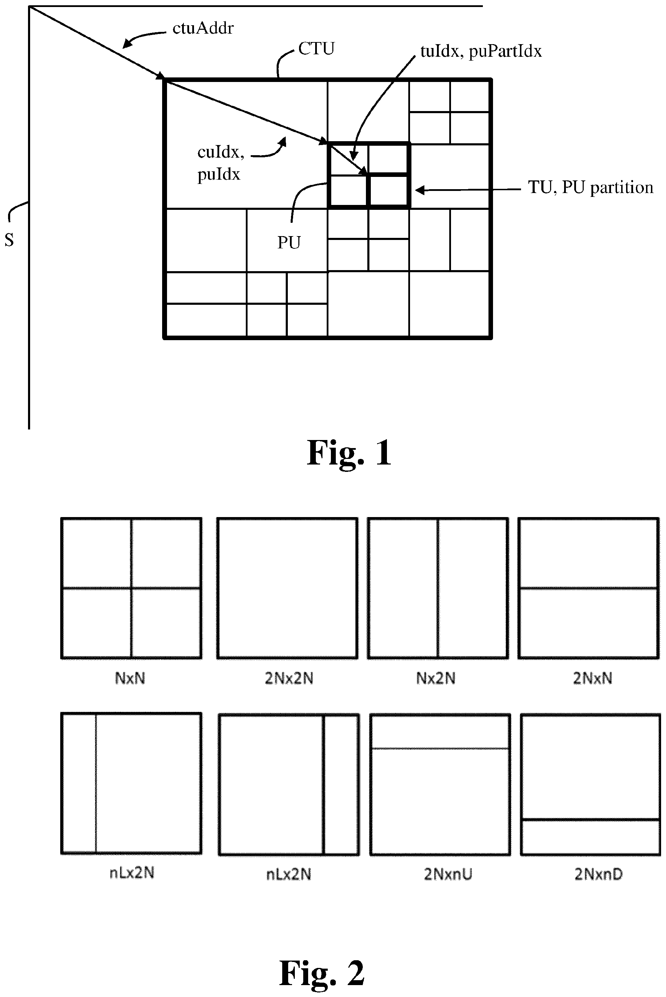

The spatial position of a CTU in a CTU grid is determined from a CTU address **ctuAddr** defining a spatial position of the top-left corner of a CTU from an origin. As illustrated on **Figure 1,** the CTU address may define the spatial position from the top-left corner of a higher-level spatial structure S containing the CTU.

A coding tree is associated with each CTU to determine a tree-division of the CTU.

As illustrated on **Figure 1,** in HEVC, the coding tree is a quad-tree division of a CTU, where each node is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puldx** defining a spatial position from the top-left corner of the CTU and the spatial position of an element of a partitioned PU is defined by a PU partition index **puPartldx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuldx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

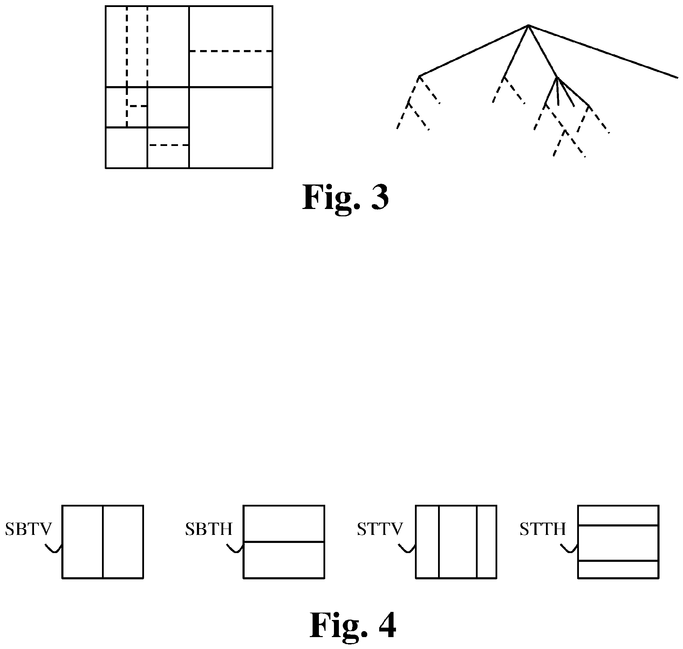

As illustrated on **Figure 3,** in VVC, the coding tree starts from a root node, i.e., the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

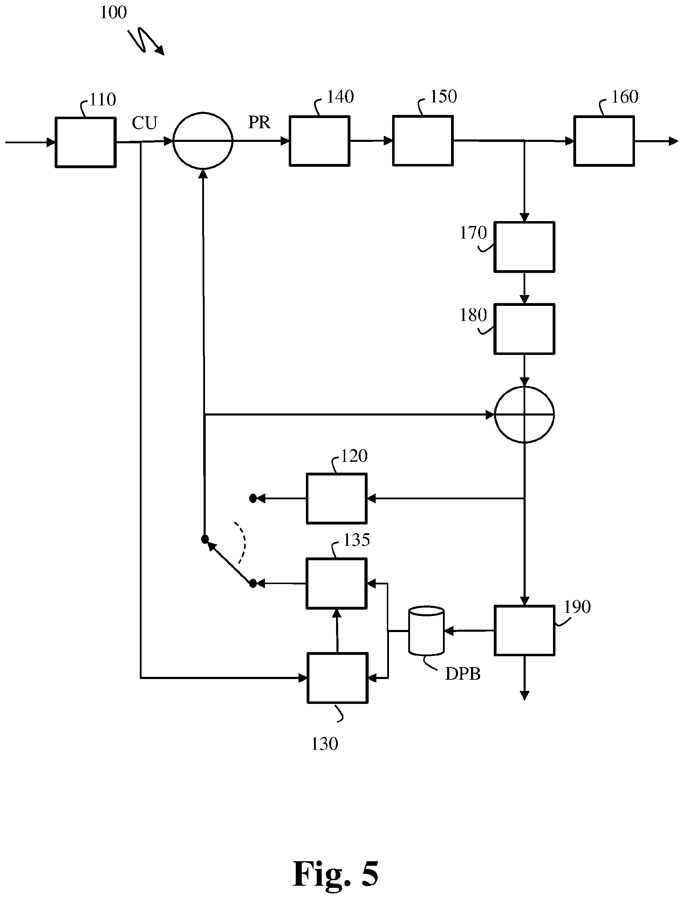

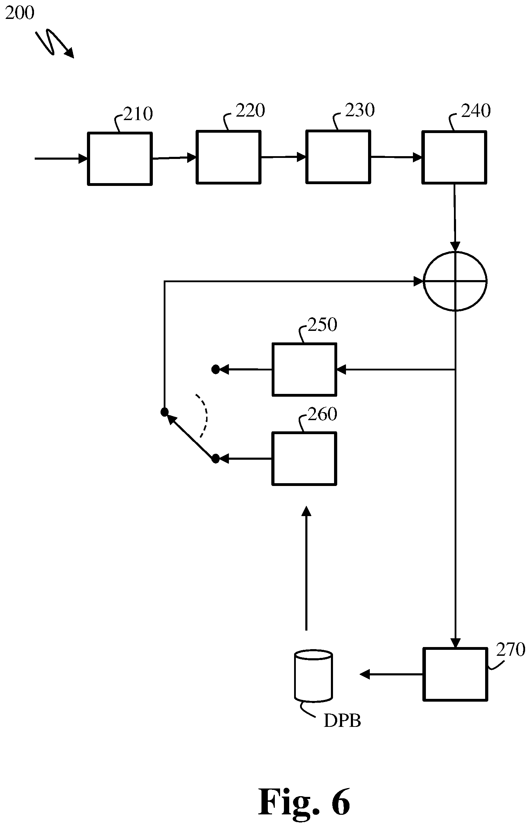

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-predicted block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is inter-prediction data comprising motion information (typically one or more motion vectors and one or more reference video picture indices) associated to the current block and other information used for obtaining a same predicted block at the encoding/decoding side. Next, motion compensation (step 135) obtains a predicted block by means of the motion vector(s) and reference video picture index (indices) determined by the motion estimation step 130. Basically, the block belonging to a selected reference video picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference video picture to compute the predicted block.

Prediction information data is signaled into the bitstream. The prediction information may comprise prediction mode (intra or inter or skip), intra/inter prediction data and any other information used for obtaining a same predicted CU at the decoding side.

The method 100 selects one prediction mode (the intra or inter prediction mode) by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the intra and inter prediction modes are set in a list of Most Probable candidate Modes (MPM list) and the best prediction mode is given as being the prediction mode p* for a current block given by:

$$p^* = \underset{p \in P}{\mathrm{Argmin}}\{RD_{cost}(p)\} \quad (1)$$

where $P$ is the MPM list for the current block, $p$ represents a candidate coding mode in that MPM list, $RD_{cost}(p)$ is a rate-distortion cost of candidate prediction mode $p$, typically expressed as:

$$RD_{cost(p)} = D(p) + \lambda \cdot R(p)$$

$D(p)$ is the distortion between the current block and a reconstructed block obtained after encoding/decoding the current block based on the candidate prediction mode $p$, $R(p)$ is a rate cost associated with the coding of the current block based on the prediction mode $p$, and $\lambda$ is the Lagrange parameter representing the rate constraint for coding the current block and typically computed from a quantization parameter Qp used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next video picture to be encoded.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks, or the filtered reconstructed blocks form a reference picture that may be stored into a decoded picture buffer (DPB) as above discussed (**Figure 5**).

In VVC as well as ECM, Multiple Transform Selection (MTS) is used. MTS is a tool that allows different transform types to be applied within a CU. This means that instead of using a single transform type for the entire CU, different CUs can be encoded using different transform types based on their characteristics. In the current VVC design, for MTS, only DST7 and DCT8 transform kernels are utilized which are used for intra and inter coding.

Additional primary transforms including DCT5, DST4, DST1, and identity transform (IDT) are employed. Also, MTS set is made dependent on the TU size and intra mode information. For blocks predicted via IntraTMP (intra prediction with template matching), DIMD (Decoder-side Intra Mode Derivation) process is used on the prediction block to derive an intra mode that is used for transform selection. Specifically, a horizontal gradient and a vertical gradient are calculated for each predicted sample to build a HoG (Histogram of Gradients). Then the intra prediction mode with the largest histogram amplitude values is used to the MTS transform set.

Overall, 16 different TU sizes are considered, and for each TU size 5 different classes are considered depending on intra-mode information. For each class, 1, 4 or 6 different transform pairs are considered. Number of intra MTS candidates are adaptively selected (between 1, 4 and 6 MTS candidates) depending on the sum of absolute value of transform coefficients. The sum is compared against two fixed thresholds to determine the total number of allowed MTS candidates:

1 candidate: sum <= th0

4 candidates: th0 < sum <= th1

6 candidates: sum > th1

Note, although a total of 80 different classes are considered, some of those different classes often share exactly same transform set. So there are 58 (less than 80) unique entries in a resultant LUT.

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly mode 66 is used for mode 67 to mode 80.

LFNST (Low frequency Non-Separable Transform) applies only for intra blocks for both luma/chroma components (separate chroma is enabled). The main goal of LFNST is to further compress the redundancy between low-frequency primary transform coefficients, which are transform coefficients from the conventional direction intra prediction.

The LFNST design in VVC is extended as follows: The number of LFNST sets (S) and candidates (C) are extended to S=35 and C=3, and the LFNST set (IfnstTrSetIdx) for a given intra mode (predModeIntra) is derived according to the following formula:

For predModeIntra < 2, IfnstTrSetIdx is equal to 2

IfnstTrSetIdx = predModeIntra, for predModeIntra in [0,34]

IfnstTrSetIdx = 68 - predModeIntra, for predModeIntra in [35,66]

Three different kernels, LFNST4, LFNST8, and LFNST16, are defined to indicate LFNST kernel sets, which are applied to 4xN/Nx4 (N≥4), 8xN/Nx8 (N≥8), and MxN (M, N≥16), respectively.
The kernel dimensions are specified by:

$$(LFSNT4, LFNST8*, LFNST16*) = (16x16, 32x64, 32x96)$$

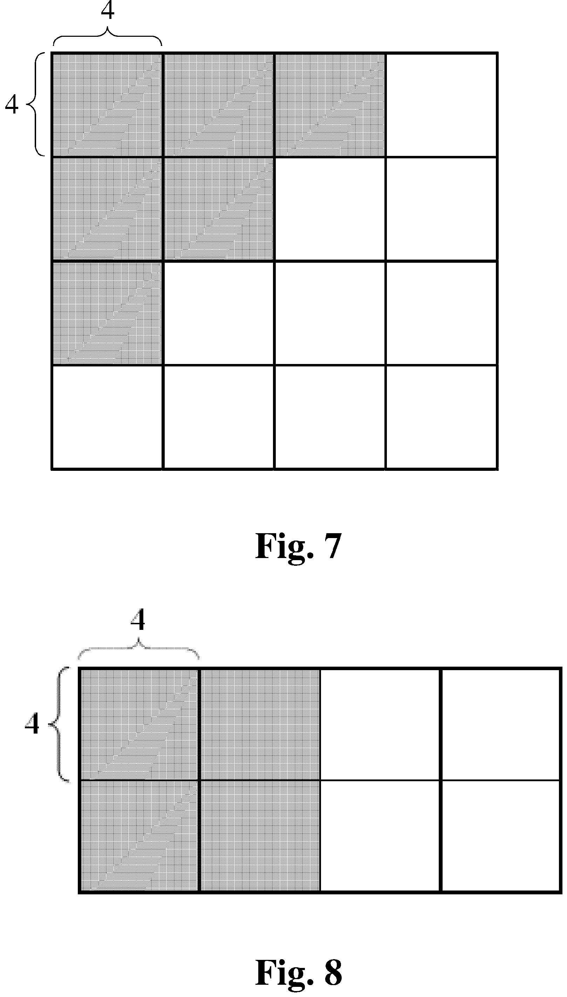

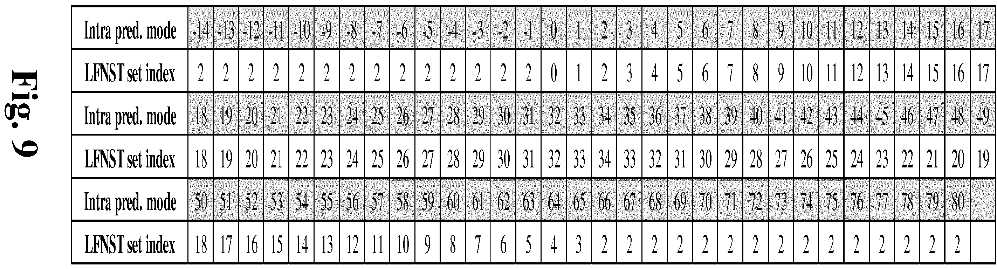

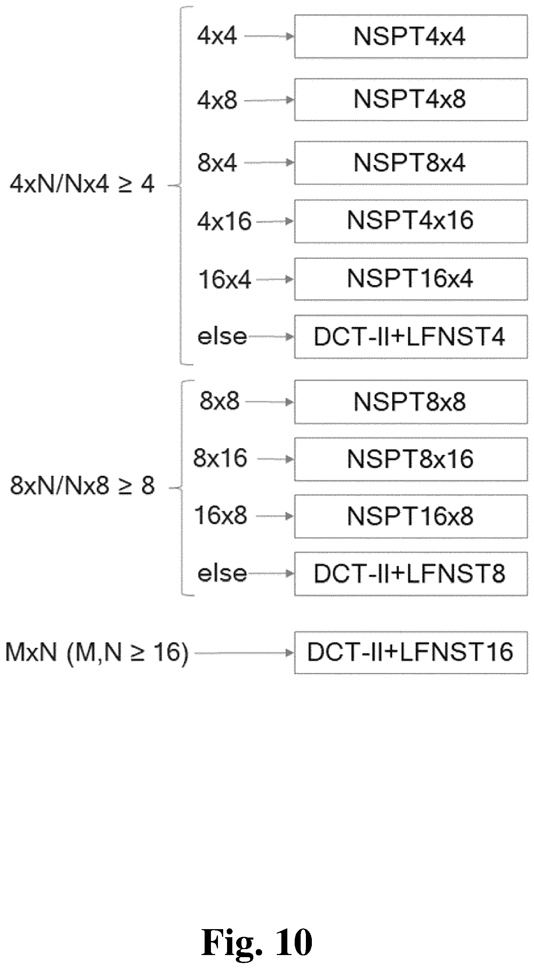

The forward LFNST is applied to top-left low frequency region, which is called Region-Of-interest (ROI). When LFNST is applied, primary-transformed coefficients that exist in the region other than ROI are zeroed out, which is not changed from the VVC standard.
The ROI for LFNST16 is depicted in **Figure 7.** It consists of six 4x4 sub-blocks, which are consecutive in scan order. Since the number of input samples is 96, transform matrix for forward LFNST16 can be Rx96. R is chosen to be 32 in this contribution, 32 coefficients (two 4x4 sub-blocks) are generated from forward LFNST16 accordingly, which are placed following coefficient scan order.
The ROI for LFNST8 is shown in **Figure 8.** The forward LFNST8 matrix can be Rx64 and R is chosen to be 32. The generated coefficients are located in the same manner as with LFNST16.
The mapping from intra prediction modes to these sets is shown in Table of **Figure 9.**
The separable DCT-II plus LFNST transform combinations are replaced with NSPT (Non-Separable Primary Transform) for the block shapes 4x4, 4x8, 8x4 and 8x8, 4x16, 16x4, 8x16 and 16x8.
The affected block sizes are summarized in **Figure 10.**
All NSPTs consist of 35 sets and 3 candidates (similar to the current LFNST).
The kernels of NSPTs have the following shapes:

- NSPT4x4: 16x16

- NSPT4x8/NSPT8x4: 32x20

- NSPT8x8: 64x32

- NSPT4x16/NSPT16x4: 64x24

- NSPT8x16/NSPT16x8: 128x40

- NSPT4x32/NSPT32x4: 128x20

- NSPT8x32/NSPT32x8: 256x24

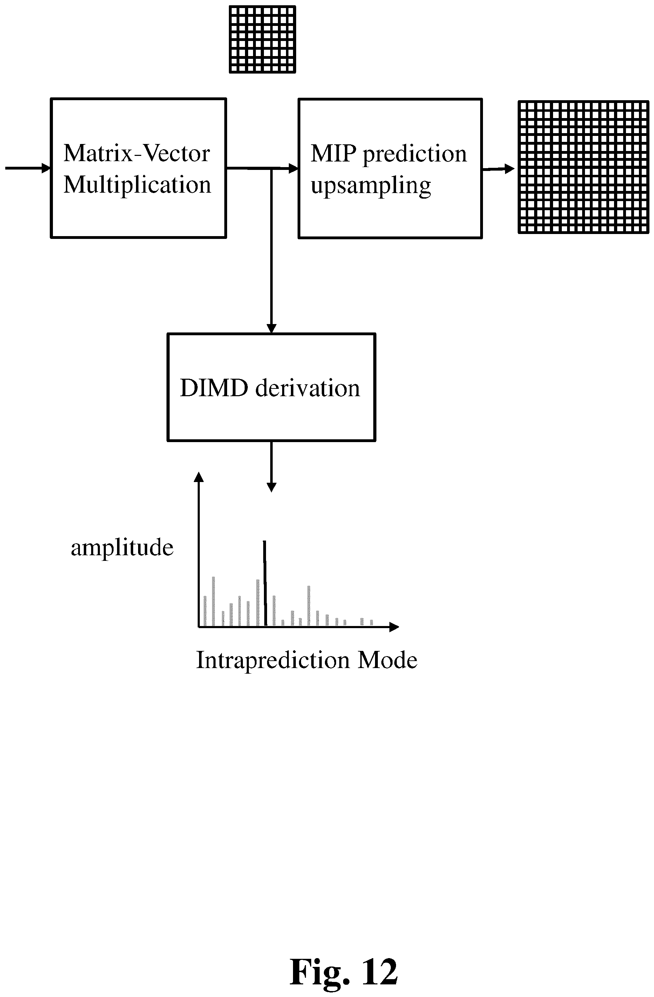

Therefore, 12, 32, 40 and 88 coefficients are zeroed-out using NSPT4x8/NSPT8x4, NSPT8x8, NSPT4x16/NSPT16x4 and NSPT8x16/NSPT16x8 respectively. For NSPT4x32/NSPT32x4 and NSPT8x32/NSPT32x8, remaining 108 and 232 positions in each transform block are zeroed-out, respectively.
For coding of LFNST/NSPT coefficients, modified context model using the previous 5 coefficients in the coding order are used for context derivation instead of the 2D coefficient neighborhood.

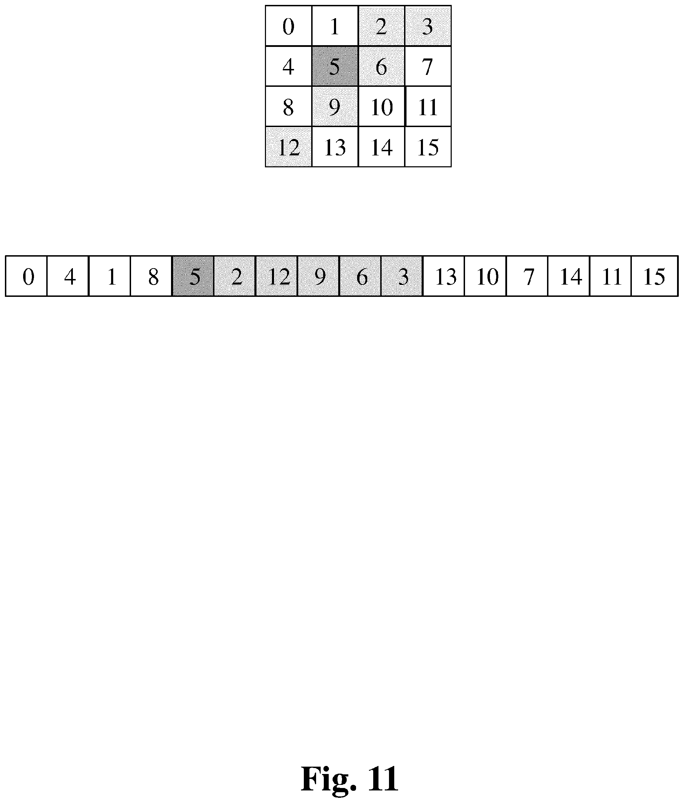

**Figure 11** illustrates an example of context modeling LFNST/NSPT coefficients.
The IfnstIdx is signaled after all last_sig_coeff_pos syntax elements in a CU since IfnstIdx is required for parsing the transform coefficients.
To utilize LFNST/NSPT for MIP (Matrix-based Intra Prediction), intraTMP and inter coding, a virtual intra prediction mode (VIPM) is employed. Each VIPM represents a kind of feature, for example, a specific direction. The VIPM is derived by applying a DIMD-like process, to the prediction block. The horizontal and vertical gradients of pixels inside the prediction block are calculated with Sobel operator and the horizontal and vertical gradients of each pixel are used to derive a direction. The amplitudes of the gradient of each pixel are accumulated for the corresponding direction. The intra prediction mode corresponding to the strongest accumulation is selected as the VIPM. With the VIPM, the transform set of LFNST/NSPT can be derived.
For MIP, as shown in **Figure 12,** the DIMD-like process is done before upsampling. Specifically, a horizontal gradient and a vertical gradient are calculated for each predicted sample to build a HoG,. Then the intra prediction mode with the largest histogram amplitude values is used to determine the LFNST transform set and LFNST Transpose flag.
For inter coding, the kernel mapping method is the same as that for intra LFNST/NSPT.

The Occurrence-based intra coding (OBIC) proposes a method for block intra prediction in video coding, in which a list called the "occurrence list" of eligible prediction modes is defined on a causal neighbourhood around a current block (current CU). In OBIC method, the modes (aka "element") in the occurrence list are associated with an "occurrence weight", which quantifies how much that mode has been used in the blocks of the causal neighbourhood. The list can then serve differently to determine which mode(s) should be used for current block.

Given a current block to be coded, OBIC visits a set of at least one block in the causal neighborhood that is already coded (or decoded) with one of the Intra Coding Tools (ICT). The limits of the causal neighborhood depends on the scanning order of the underlying codec (e.g. raster) as well as independent areas defined by tools (e.g. Tiles, Slices, Sub-pictures etc.).

The causal neighborhood might include both adjacent and non-adjacent neighboring blocks. An adjacent neighboring block is a block that shares at least one pixel of border with current block. On the contrary, a non-adjacent neighboring block shares no pixel of border with current block.

Moreover, the causal neighborhood takes into account a concept of eligibility. Depending on the specific design of OBIC (elaborated below), rules to identify eligible blocks can vary. In general, an eligible block in the causal neighborhood is a block whose ICT (Intra Coding Tools) can be considered by the specific design of OBIC to be used for the current block. For instance, if an OBIC design operates only based on Regular Intra Prediction Mode (RIPM), then only RIPM coded blocks in the causal neighborhood must be visited.

Depending on the design of OBIC algorithm, the order in which eligible blocks on the causal neighborhood are visited might or might not be arbitrary.

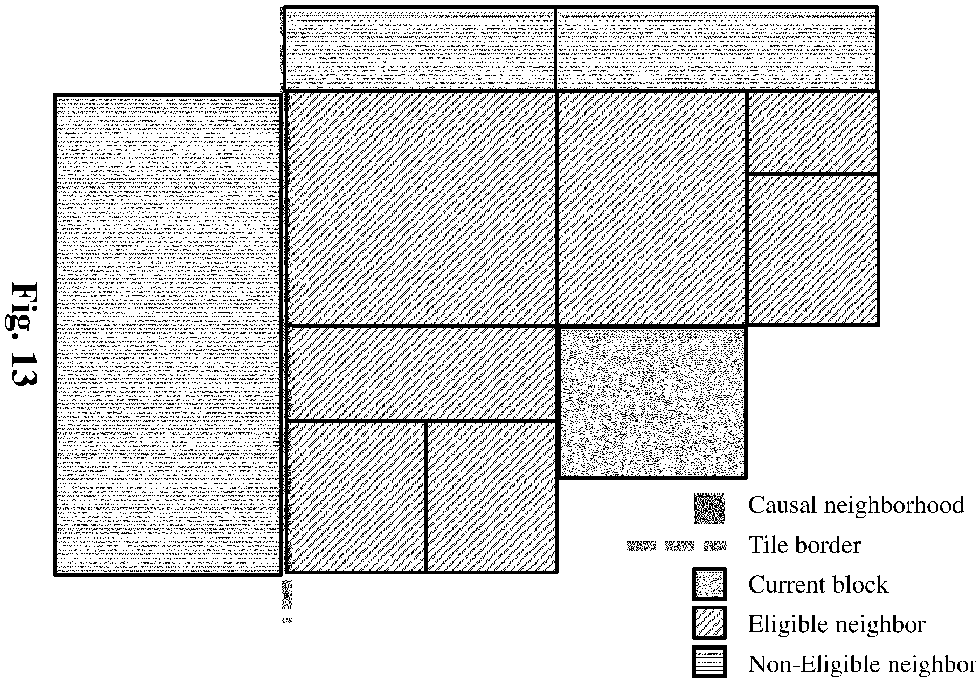

**Figure 13** shows an example of casual neighborhood that is limited by Tiles and contains both adjacent and non-adjacent neighboring blocks, where some of them are not eligible. Once the causal neighborhood is identified, an empty list named the occurrence list is initialized. This list is to be progressively filled with some "elements", where each element is a pair of a unique identifier *"id"* and its occurrence weight "*cw*". The elements are extracted from visited coded blocks on the causal neighborhood and as the name suggests, each unique *id* can appear at most once in the list.

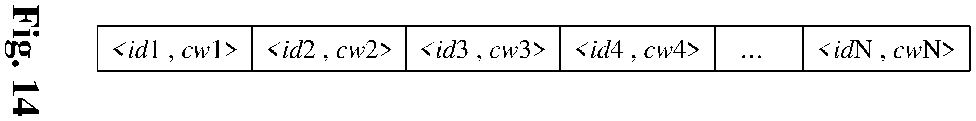

**Figure 14** shows an example of the occurrence list. In the example, N pairs (idj,$icw_{idj}$) avec j=1 to N are represented, each pair corresponding to an element of the occurrence list. The definition of *id* of an element depends on the underlying design of OBIC. For example, in an OBIC design that operates on RIPMs, the identifier to extract from the neighboring block might be the index of IPM (e.g. between 0 and 66 in VVC) that is used for intra coding of that block. This IPM might come from different intra coding tools such as DIMD, TIMD (Template-based Intra Mode Derivation), MPM (Most Probable Mode Coded) etc.

Moreover, in an OBIC design that operates on non-RIPMs, the identifier might be type of ICT that is used for that neighboring block, such as IBC (Intra Block Copy), IntraTmp, MIP etc. Each element *id* is associated with one occurrence weight *ocw* in the occurrence list. This weight *ocw* is computed as the accumulation of several individual occurrence weights or "*icw*", where each *icw* is computed when a new neighboring block with identifier *id* is visited. In other words, if element *id* was visited four times during the causal visits, four *icw* values are summed to give the *cw* of *id* in the occurrence list.

The *ocw* can be computed using different methods. For instance, let 'A' be an $8\times8$ block that is coded by a single IPM of Planar (e.g. hence *id : PLANAR_IDX*), using the MPM intra coding tool and is currently being visited in the causal neighborhood. That is to say, OBIC should either add a new element with *id* of PLANAR_IDX or update its occurrence weight *cw* if its *id* already exists in the occurrence list. Either way, an individual occurrence weight *ocw* should be computed for the element "PLANAR_IDX" based on block A. The simplest individual weight is the occurrences in terms of number of blocks. In other words, visiting "PLANAR_IDX" on block A would give *ocw=1* which increases its *cw* by the value '1'.

Alternatively, one might compute individual weight by the number of pixels of block A. In this case, visiting "PLANAR_IDX" on block A would give *ocw=8$\times$8=64* which increases its *cw* by the value 64.

Internal settings of the ICT that is used by a neighboring block can also be taken into account for computing *icw* of a visited element *id.* For instance, let B be an $8\times8$ block coded with DIMD, where five IPMs are blended using their HoG-based DIMD weights. In this case, one might first normalize the HoG-based DIMD weights so that they sum up to 1. Then each of the five angular IPM is treated as an independent element, with the *id* based on their IPM index, and then their normalized HoG-based DIMD weight is used as their *icw.* This means that visiting block B would update the *cw* of five elements in the occurrence list.

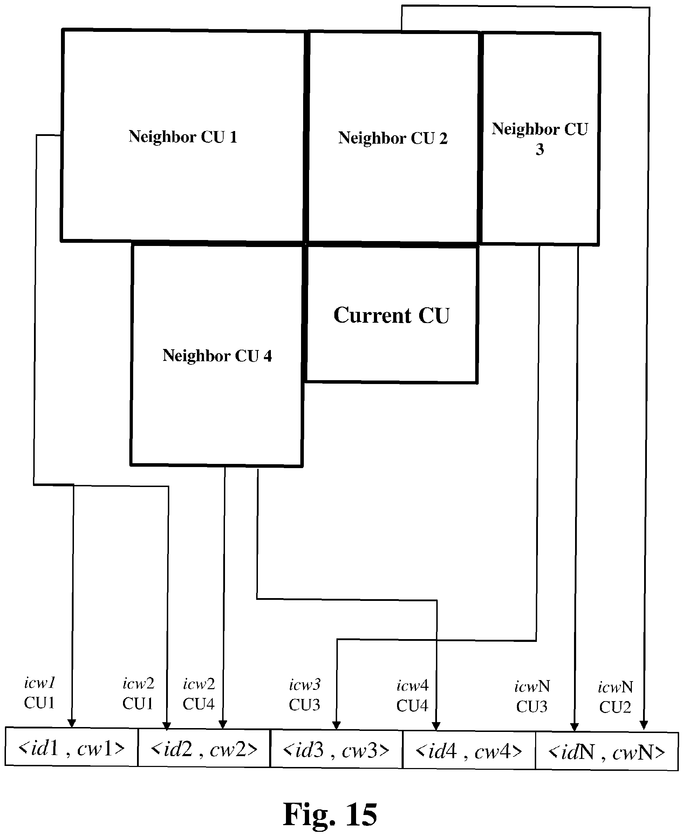

**FIG. 15** shows an example of deriving at least one pair (id,$icw_{id}$) for each eligible neighboring block.

In this exemple, four eligible neighboring blocks CU1 to CU4 are considered one by one. Two pairs (id1,$icw_{id1}$), (id2,$icw_{id2}$) are derived from the eligible neighboring blocks CU1, i.e. the intra coding modes identified by the identifiers id1 and id2 are used for coding the eligible neighboring block CU1 and two individual occurrence weighs $icw_{id1}$ and $icw_{id2}$ are derived from the neighboring block CU1. The occurrence weight of the element of the occurrence list corresponding to the identifier id1 is updated based on the individual weight $icw_{id1}$ or created in the occurrence list if it does not already exist. The occurrence weight of the element of the occurrence list corresponding to the identifier id2 is updated based on the individual weight $icw_{id2}$ or created in the occurrence list if it does not already exist. Two pairs (id3,$icw_{id3}$), (idN,$icw_{idN}$) are derived from the eligible neighboring blocks CU3, i.e. the intra coding modes identified by the identifiers id3 and idN are used for coding the eligible neighboring block CU3 and two individual occurrence weighs $icw_{id3}$ and $icw_{idN}$ are derived from the neighboring block CU3. The occurrence weight of the element of the occurrence list corresponding to the identifier id3 is updated based on the individual weigh $icw_{id3}$ or created in the occurrence list if it does not already exist. The occurrence weight of the element of the occurrence list corresponding to the identifier idN is updated based on the individual weigh $icw_{idN}$ or created in the occurrence list if it does not already exist. Two pairs (id2,$icw_{id2}$), (id4,$icw_{id4}$) are derived from the eligible neighboring blocks CU4, i.e. the intra coding modes identified by the identifiers id2 and id4 are used for coding the eligible neighboring block CU4 and two individual occurrence weighs $icw_{id2}$ and $icw_{id4}$ are derived from the neighboring block CU4. The occurrence weight of the element of the occurrence list corresponding to the identifier id2 is updated based on the individual weigh $icw_{id2}$ or created in the occurrence list if it does not already exist. The occurrence weight of the element of the occurrence list corresponding to the identifier id4 is updated based on the individual weigh $icw_{id4}$ or created in the occurrence list if it does not already exist.

For a current block of video picture, coded in any mode, the present disclosure calculates a list of at least one regular intra-prediction mode for coding at least one future block of a current block of a video picture. Calculating the list of at least one regular intra-prediction mode is based on reconstructed samples of said current block, i.e. based on the reconstructed block of said current block. First, the reconstructed block of the current block is obtained and next, the list of the at least one regular intra-prediction mode is determined based on the reconstructed block.

So, the at least one regular intra-prediction modes of the list that is calculated for the current block are not changing the sample reconstruction of the current block but rather making the coding of at least one the future block to be more efficient.

Calculating the list of the at least one RIPM based on its reconstructed samples, i.e. based on the reconstructed block, is called recalculating the regular intra-prediction modes of the current block and each RIPM of the list of the at least one RIPM is called a recalculated RIPM. Each RIPM of the current block that is determined based on the current block is called an original RIPM.

In the following, RIPM means regular intra-prediction mode. There are 67 RIPMs in VVC, including 65 angular modes and two modes (Planar and DC) for plain content. ICT means Intra Coding Tools. An ICT is a sub-algorithm of an underlying codec for encoding one intra block. In VVC, there are roughly two categories of ICTs: ICTs based on RIPM and ICTs that are non-RIPM, i.e. ICTs that do not rely on RIPMs for prediction of block's pixels. BIPMs are tools that somehow use one IPM for predicting a current block's pixels. The difference between ICTs based on IPMs and ICTs based on non-RIPMs is usually the signaling method and/or number of IPMs involved in the prediction. Alternatively, ICTs based on non-RIPMs have their own mechanism to compute pixel prediction.

ECM defines two lists of ICTs, one whose ICTs are based on RIPMs and one whose ICTs are based on non-RIPMs.

The list of ICTs based on RIPMs may comprise DIMD, TIMD, SGPM (Spatial Geometric Prediction Mode) and/or MPM modes.

The list of ICTs based on non-RIPMs may comprise MIP, EIP (Extrapolation filter-based intra prediction, L. Xu et al, "EE2-1.14: An extrapolation filter-based intra prediction mode", 33rd JVET meeting (online), document JVET-AG0058), IBC, IntraTMP, PLT (Palette mode) and/or CCP (Cross Component Prediction).

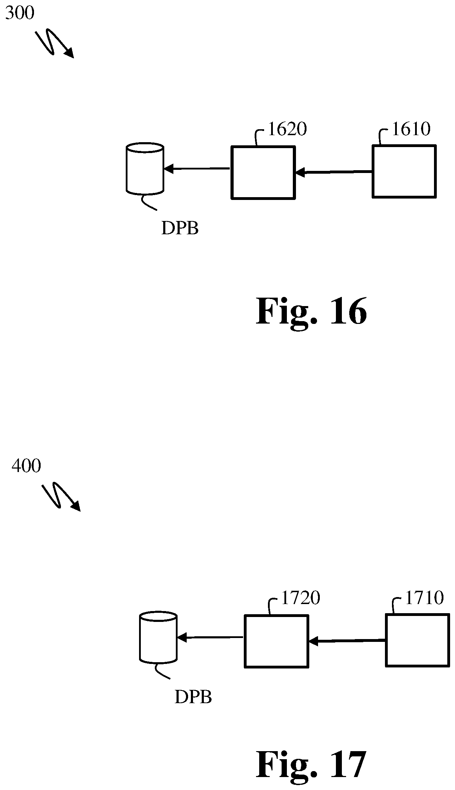

**Figure 16** illustrates a schematic block diagram of steps of a method 300 for recalculating at least one RIPM of a current block for coding at least one future block of the current block of a video picture VP according to some embodiments of the present disclosure. For example, method 300 may be performed by an encoder.

In step 1610, the reconstructed block of the current block is obtained.

For example, the reconstructed block of the current block may be obtained by combining, typically summed, the decoded prediction residual block and the predicted block as detailed above in relation with **Figure 5.** The reconstructed block may also be obtained as output of step 190 of **Figure 5** when in-loop filtering is applied on the reconstructed block obtained by combining the decoded prediction residual block and the predicted block.

In step 1620, a list of the at least one (recalculated) RIPM is determined based on the reconstructed block.

**Figure 17** illustrates a schematic block diagram of steps of a method 400 for recalculating at least one RIPM for decoding at least one future block of a current block according to some embodiments of the present disclosure. For example, method 400 may be performed by a decoder.

In step 1710, the reconstructed block of the current block is obtained.

For example, the reconstructed block of the current block may be obtained by combining, typically summed, the decoded prediction residual block and the predicted block as detailed above in relation with **Figure 6.** The reconstructed block may also be obtained as output of step 270 of **Figure 6** when in-loop filtering is applied on the reconstructed block obtained by combining the decoded prediction residual block and the predicted block.

In step 1720, a list of the at least one (recalculated) RIPM is determined based on the reconstructed block.

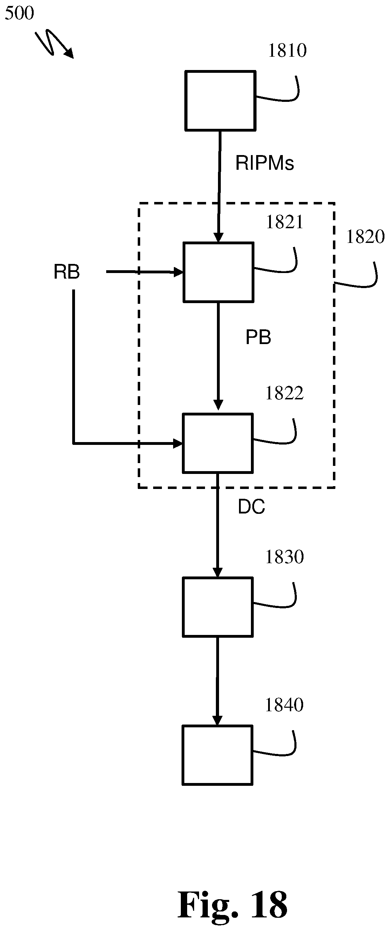

**Figure 18** illustrates a schematic block diagram of steps of a method 500 for recalculating RIPMs of a current block from its reconstructed samples according to some embodiments of the present disclosure.

Recalculating RIPMs of a current block from its reconstructed samples, i.e. from its reconstructed block RB, means determining a first list of RIPMs for the reconstructed block RB and then determining a second list of at least one recalculated RIPM based on the reconstructed block RB.

Recalculated RIPMs for a block indicates the RIPMs of the second list of the at least one (recalculated) RIPM.

Then, method of **Figure 18** determines a list of at least recalculated RIPMs based on the reconstructed block but not on the current block. Consequently, the RIPMs of the second list of RIPMs that are determined from the reconstructed block, i.e., the recalculated RIPMs, may be different from original RIPMs of the current block, i.e., the RIPMs of the current block calculated from the current block. The second list of at least one RIPM is then the list at least one recalculated RIPM that is determined based on the reconstructed block RB in steps 1620 or 1720.

At step 1810, the first list of RIPMs is defined for the reconstructed block RB.

The first list of RIPMs may be generated in different ways, considering the complexity to test different numbers of RIPMs of the first list of the at least one RIPM.

In some embodiments of step 1810, the first list of RIPMs may comprise all RIPMs of the underlying codec in order to find the best performing RIPMs for predicting the reconstructed block RB according to an exhaustive search.

For example, the first list of RIPMs may comprise the 67 RIPM modes for intra prediction as defined by VVC/H.266.

Such an exhaustive search may provide the best sets of RIPMs for predicting the reconstructed block RB with the expense of introducing a lot of complexity especially in the decoder side.

In some embodiments of step 1810, the first list of RIPMs may comprise a subset of RIPMs of all the RIPMs of an underlying codec, i.e., all the RIPMs that could be used for predicting the current block.

In some embodiments, the subset of RIPMs may depend on characteristic of the current block.

For example, a characteristic of the current block may be the current block size, a prediction mode used for predicting the current block or a residual energy of the current block.

For example, when the current block is predicted using a RIPM, then the subset of RIPMs (first list of the at least one RIPM) may include the RIPM and its surrounding RIPMs in terms of mode index. For example, RIPMs of an underlying codec may be identified by indices and surrounding RIPMs are identified by adding and/or subtracting offset values to the index identifying the RIPM used for predicting the current block.

In some embodiments, the offset values may be fixed or may be determined based on a characteristic of the current block.

For example, a characteristic of the current block is the current block size, a prediction mode used for predicting the current block or a residual energy of the current block.

Some RIPM-based tools such as TIMD and DIMD may use more than one RIPM for predicting the current block. Then, in some embodiments of step 1810, all the RIPMs used for predicting the current block and their surrounding RIPMs, in terms of mode index, may be added to the first list of RIPMs.

In some embodiments, the subset of RIPMs may depend on texture information extracted from the reconstructed block RB, said texture information mapping reconstructed sample patterns to all the RIPMs of an underlying codec.

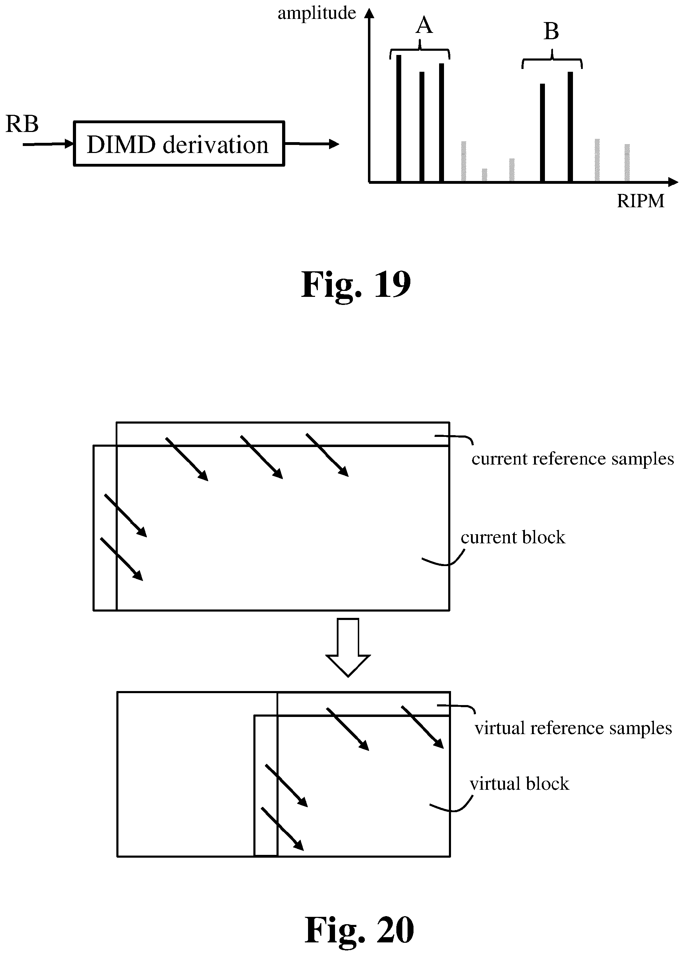

For example, as illustrated in **Figure 19,** the DIMD-like method may be applied to the reconstructed block samples in order to generate the subset of RIPMs.

More precisely, a horizontal gradient and a vertical gradient are calculated for each predicted sample of the reconstructed block RB to build a HoG defining a mapping between the samples of the reconstructed block RB and RPIMs of the underlying codec. RIPMs having the highest amplitudes in the HoG may be added to the subset of RIPMs.

In the example of **Figure 19,** five RIPMs A and B having the highest amplitudes in the HoG may be added to the subset of RIPMs.

Using the DIMD-like method for defining the subset of RIPMs is especially helpful when the current block is predicted based on a non-RIPM or inter prediction mode because RIPMs (and their surroundings RIPMs in terms of mode index) do not exist to define the subset of RIPMs.

In some cases, the original RIPMs and recalculated RIPMs may be same RIPMs. In order to avoid such redundant calculations, in some embodiments of step 1810, obtaining the first list of RIPMs may depend on residual energy of the current block that depends on a residual block calculated by subtracting a prediction block corresponding to one original RIPM, i.e. to one RIPM used for predicting the current block from the signal of the current block.

In some embodiments, the residual energy may be computed in the pixel-domain, i.e. calculating the residual energy may be based on pixel values of the residual block.

This last embodiment is advantageous because in the pixel-domain, spatial areas may be identified within the current block (and thus within the reconstructed block RB), where the pixel-domain residual energy is high. RIPMs of the underlying codec whose definition depend on the identified high-energy areas may then be added to the first list of RIPMs.

In some embodiments, the residual energy may be computed in the transform-domain, i.e. calculating the residual energy may be based on transform coefficients obtained by transforming the residual block.

The advantage of a transform-domain energy calculation is that it provides information during the syntax element parsing of the decoder. Hence, an adaptive signaling strategy can be used based on the residual energy.

In some embodiments, if the residual energy of a current block is smaller than a threshold, then the encoder or decoder may skip obtaining the second list of at least one RIPM for that current block, i.e. the encoder or decoder skips recalculating the RIPMs (method of **Figure 18**) for that current block.

In some embodiments, if the transform coefficients associated with the residual block of a current block are smaller than a threshold, then the encoder or decoder may skip obtaining the second list of at least one RIPM for that current block, i.e. the encoder or decoder skips recalculating the RIPMs (method of **Figure 18**) for that current block.

In some embodiments, the number of RIPMs in the first list of RIPMs may depend on the residual energy of the current block.

For example, the number of RIPMs in the first list of RIPMs is reduced when the residual energy of the current block is below a threshold.

At step 1820 of Figure 18, an iterative search is executed to determine which of the RIPMs of the first list of RIPMs are added in the second list of the at least one RIPM.

At each iteration of the search, a current RIPM of the first list of RIPMs is tested and steps 1821 and 1822 are executed.

At step 1821, a prediction block PB is obtained by predicting the reconstructed block RB based on the current RIPM.

In some embodiments of step 1821, the prediction block may use adjacent and non-adjacent reference lines of the reconstructed block RB for the prediction.

At step 1822, a distortion cost associated with the current RIPM is calculated based on the reconstructed block RB and the prediction block PB obtained for the current RIPM.

In some embodiments of step 1822, the distortion cost may be calculated as sum of absolute differences (SAD), sum of squared errors (SSE), sum of absolute transform differences (SATD) or any other distortion metric that may be applicable to the underlying codec.

Testing a current RIPM of the first list of RIPMs means obtaining a prediction block PB and associating a distortion cost to said current RIPM, i.e. executing steps 1821 and 1822.

At step 1830, the first list of RIPMs is sorted based on the distortion costs associated with the RIPMs of the first list of RIPMs.

At step 1840, the second list of at least one recalculated RIPM is obtained by selecting at least one first RIPM from the sorted first list of RIPMs. The second list of recalculated RIPMs are then stored in the memory to be used for predicting (coding) of future blocks.

In some embodiments of step 1840, the second list of the at least one recalculated RIPM may be obtained based on maximum difference between maximum and minimum distortion costs associated with the at least one recalculated RIPM (of the second list of the at least one recalculated RIPM), i.e. difference between the maximum and minimum distortion costs associated with the at least one recalculated RIPM does not exceed a threshold.

In some embodiments, the maximum number of RIPMs in the second list of the at least one RIPM may be fixed.

In some embodiments, the number of RIPMs of the second list of the at least one recalculated RIPM may depend on at least one characteristic of the current block.

For example, a characteristic of the current block is the current block size, a prediction mode used for predicting the current block or a residual energy of the current block.

In some embodiments of step 1820, testing or not testing the surrounding RIPMs of a current RIPM of the first list of RIPMs may depend on a comparison between the distortion cost associated with the current RIPM and a minimum distortion cost associated with a recalculated RIPM of the second list of the at least one recalculated RIPM.

This is an early termination process that may speed-up the method of **Figure 18.**

For example, assuming a current status of the search indicates that a minimum distortion cost is associated with one recalculated RIPM of the second list identified by an index 20, a current RIPM 35 of the second list of the at least one recalculated RIPM that would be associated with a distortion cost equals to twice $Cost_{20}$ may lead to skip testing the surrounding RIPMs of the current RIPM 35.

In some embodiments of step 1820, the search may use a step size, between indexes identifying the RIPMs of the first list of RIPMs, larger than one.

For example step size of 2 or 5 may be used.

This embodiments reduce the complexity of the method of Figure 18, especially at the decoder.

In some embodiments of step 1820, once at least one best RIPM is determined, then the surrounding RIPMs of each of the at least one best RIPM may be also tested.

In some embodiment, a specific order of testing the surrounding RIPMs may be specified to be respected both at the encoder and the decoder sides.

In some embodiments, the specific order of testing may be encoded in a bitstream by an encoder and decoded from a bitstream by a decoder.

The method of **Figure 18** may increase the complexity of the codec.

In some embodiments of step 1820, the reconstructed block RB may be resampled or sub-sampled and testing a current RIPM of the first list of RIPMs may be based on resampled or sub-sampled reconstructed block.

For example, the reconstructed block may be sub-sampled by factor of 2 in horizontal and/or vertical dimensions.

In some embodiments of step 1820, testing (1820) a current RIPM of the first list of RIPMs may be based on a subset of samples of the reconstructed block.

For example, samples located in right-most and bottom-most areas of the reconstructed block RB may be considered to determine the recalculated RIPMs, i.e. to obtain the prediction block PB (step 1821) and to calculate the distortion cost (step 1822) for a current RIPM of the first list of RIPMs.

This example is especially advantageous because the intra prediction error tends to be larger towards right and bottom areas of a block.

For example, as illustrated in **Figure 20,** a virtual reconstructed block may be defined to indicate the subset of samples of the reconstructed block RB used for testing a current RIPM.

For example, reference samples of the reconstructed block may be also considered as being reference samples of the virtual block.

In some embodiments of step 1821, obtaining a prediction block may be based on both reference samples of the reconstructed block located in a neighborhood around the reconstructed block and reference samples of the virtual block located in a neighborhood around the virtual block.

Recalculated RIPMs of the second list of the at least one recalculated RIPM may be used for predicting future blocks, i.e. for predicting blocks after the current block has been coded/decoded.

The recalculated RIPMs may be used in various tools in the underlying codec. For example, the recalculated RIPMs may be used in OBIC (Occurrence-based Intra Coding) mode, TIMD mode, MPM generation, or transform selection of future blocks.

In some embodiments, one future block of the current block may be predicted based on one OBIC mode determining an occurrence list of RIPMs, each RIPM being associated with an occurrence weight representing use frequency of said RIPM for coding or decoding at least one neighboring block in a causal neighborhood of the future block.

For example, a histogram of occurrences of RIPMs may be generated and, RIPMs of the OBIC mode that correspond to highest amplitudes of the histogram of occurrences may be RIPMs used for predicting the future block.

In some embodiments, the occurrence list may comprise RIPMs calculated from the future block, recalculated RIPMs of the current block or both RIPMs calculated from the future block and the at least one recalculated RIPMs of the second list of the at least one recalculated RIPM.

In some embodiments, deciding whether or not the occurrence list comprises the at least one recalculated RIPMs of the second list of the at least one recalculated RIPM may depend on characteristic of the future block.

For example, the characteristic may be the size of the current block. For example, the at least one recalculated RIPMs of the second list of the at least one recalculated RIPM may be used only for large current blocks, i.e. for future block having size greater than a threshold.

In some embodiments, deciding whether or not the occurrence list comprises the at least one recalculated RIPMs of the second list of the at least one recalculated RIPM may depend on distances, in terms of number of pixel, of the neighboring blocks to the future block.

For example, if a neighboring block is further away from the future block, then the occurrence list may only comprise at least one RIPM calculated from the future block.

For example, when a neighboring block of the future block is coded in a mode other than RIPM, e.g. when the neighboring block is predicted using a non-RIPM or an inter prediction mode then the occurrence list may comprise both the RIPMs calculated from the future block and the at least one recalculated RIPMs of the second list of the at least one recalculated RIPM.

In some embodiments, when the occurrence list comprises RIPMs calculated from the future block, the at least one recalculated RIPMs of the second list of the at least one recalculated RIPM or both the RIPMs calculated from the future block and the at least one recalculated RIPMs of the second list of the at least one recalculated RIPM, weights are associated with the RIPMs, the weight values depend on whether the RIPMs are calculated from the future block or are one of the at least one recalculated RIPMs of the second list of the at least one recalculated RIPM.

For example, larger weights may be associated with to the at least one recalculated RIPMs of the second list of the at least one recalculated RIPM compared to weights associated with RIPMs calculated from the future block.

In some embodiments, a first OBIC mode may only use the RIPMs calculated for the future block, a second OBIC mode may only use RIPMs calculated from the future block and a third OBIC mode may use both the RIPMs calculated from the future block and the at least one recalculated RIPMs of the second list of the at least one recalculated RIPM, and the encoder may test each of the three OBIC modes and may select the best mode according to a rate-distortion optimization.

In some embodiments, an indicator is signaled, in a bitstream, to indicate the selected OBIC mode for the future block, i.e. the encoder may encode the indicator in the bitstream and the decoder may decode the indicator from the bitstream to indicate to the decoder the selected OBIC mode for the future block.

For example, the indicator is flag that is present in the bitstream to indicate that the selected OBIC mode uses the at least one recalculated RIPMs of the second list of the at least one recalculated RIPM for decoding the future block.

In some embodiments, when the indicator indicate that the OBIC mode uses the at least one recalculated RIPMs of the second list of the at least one recalculated RIPM that is derived from right-most and/or bottom-most areas of the reconstructed block RB (step 1820), the at least one recalculated RIPM for is different from RIPMs that would have been derived for a future block based on a template defined by said right-most and/or bottom-most areas of the reconstructed block RB.

This embodiment avoid wasting the signaling of the indicator because said right-most and/or bottom-most areas of the reconstructed block RB are most likely going to be used as template for a future block, at their immediate neighborhood. Therefore, if the recalculated RIPM for the current block is similar to the RIPM that would have been computed on its template region defined from said right-most and/or bottom-most areas of the reconstructed block RB, then the signaled flag on the future block to determine between those two choices will be wasted.

In some embodiments, instead of signaling the indicator, the decoder may determine an OBIC mode for a future block based on template-cost based method such as a TIMD-like method. Basically, template-based intra prediction mode information is derived for the future block based on at least one reconstructed sample of a template defined around the future block. The template-based intra prediction mode information is derived for each OBIC mode, and the OBIC mode which obtains lower distortion cost on the template is selected and used for prediction.

In some embodiments, when a first value of the indicator indicates a first OBIC mode using the at least one recalculated RIPMs of the second list of the at least one recalculated RIPM, a second value of the indicator indicates a second OBIC mode using RIPMs calculated from the future block and a third value of the indicator indicates a third OBIC mode using both the at least one recalculated RIPMs of the second list of the at least one recalculated RIPM and the RIPMs calculated from the future block, the indicator may be signaled in a bitstream and the decoder may determine associations between the indicator value signaled and the three OBIC modes based on a template cost calculated for each OBIC mode.

For example, in the encoder side, the associations between indicator values and OBIC modes may be defined based on their corresponding mode's template cost. In the decoder side, in the parsing process of the signaled indicator, decoder is not aware which OBIC mode corresponds to the signaled indicator value. Later, in the sample decoding stage, each OBIC mode is derived, their RIPM's are tested on the future block's template and a template cost is calculated for the OBIC mode. Then, the decoder determines the associations between the indicator values according to the template costs and the OBIC modes and is able to determine what is the signaled OBIC mode for the future block.

In some embodiments, the at least one recalculated RIPMs of the second list of the at least one recalculated RIPM may be added to the MPM list of the future blocks. For example, when generating the MPM list, either or both the RIPMs calculated from the future blocks and the at least one recalculated RIPMs of the second list of the at least one recalculated RIPM may be added to the MPM list.

In some embodiments, the at least one recalculated RIPMs of the second list of the at least one recalculated RIPM in the MPM list may be prioritized.

In some embodiments, the at least one recalculated RIPMs of the second list of the at least one recalculated RIPM derived for a channel may be used as intra prediction modes in a different channel.

For example, a chroma block may use co-located luma block's recalculated RIPMs as intra prediction modes for example in MPM and Direct Mode (DM).

In some embodiments, the at least one recalculated RIPMs of the second list of the at least one recalculated RIPM of a current block may be used for transform selection of a co-located block in different channel.

For example, a chroma block, may use recalculated RIPMs of a co-located luma block in order to select transform types in MTS, LFNST, etc.

In some embodiments, the usage of the RIPM recalculation from reconstructed samples may be signaled in SPS (Sequence Parameter Set), PPS (Picture Parameter Set), PH (Picture Header) or any other high level signaling mechanisms of VVC or ECM for example.

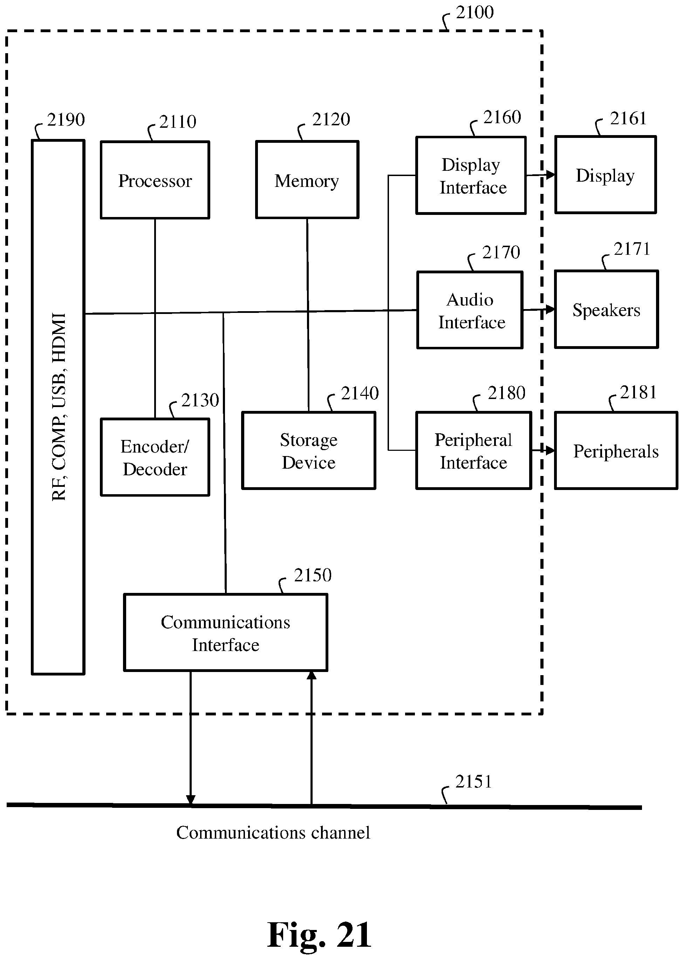

**Figure 21** shows a schematic block diagram illustrating an example of a system 2100 in which various aspects and exemplary embodiments are implemented.

System 2100 may be embedded as one or more devices including the various components described below. In various exemplary embodiments, system 2100 may be configured to implement one or more of the aspects described in the present application.

Examples of equipment that may form all or part of the system 2100 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 2100, singly or in combination, may be embodied in a single integrated circuit (IC), multiple ICs, and/or discrete components. For example, in at least one exemplary embodiment, the processing and encoder/decoder elements of system 2100 may be distributed across multiple ICs and/or discrete components. In various exemplary embodiments, system 2100 may be communicatively coupled to other similar systems, or to other electronic devices, via, for example, a communications bus or through dedicated input and/or output ports.

System 2100 may include at least one processor 2110 configured to execute instructions loaded therein for implementing, for example, the various aspects described in the present application. Processor 2110 may include embedded memory, input output interface, and various other circuitries as known in the art. System 2100 may include at least one memory 2120 (for example a volatile memory device and/or a non-volatile memory device). System 2100 may include a storage device 2140, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 2140 may include an internal storage device, an attached storage device, and/or a network accessible storage device, as non-limiting examples.

System 2100 may include an encoder/decoder module 2130 configured, for example, to process data to provide encoded/decoded video picture data, and the encoder/decoder module 2130 may include its own processor and memory. The encoder/decoder module 2130 may represent module(s) that may be included in a device to perform the encoding and/or decoding functions. As is known, a device may include one or both encoding and decoding modules. Additionally, encoder/decoder module 2130 may be implemented as a separate element of system 2100 or may be incorporated within processor 2110 as a combination of hardware and software as known to those skilled in the art.

Program code to be loaded onto processor 2110 or encoder/decoder 2130 to perform the various aspects described in the present application may be stored in storage device 2140 and subsequently loaded onto memory 2120 for execution by processor 2110. In accordance with various exemplary embodiments, one or more of processor 2110, memory 2120, storage device 2140, and encoder/decoder module 2130 may store one or more of various items during the performance of the processes described in the present application. Such stored items may include, but are not limited to video picture data, information data used for encoding video picture data, a bitstream, matrices, variables, and intermediate or final results from the processing of equations, formulas, operations, and operational logic.

In several exemplary embodiments, memory inside of the processor 2110 and/or the encoder/decoder module 2130 may be used to store instructions and to provide working memory for processing that may be performed during encoding or decoding.

In other exemplary embodiments, however, a memory external to the processing device (for example, the processing device may be either the processor 2110 or the encoder/decoder module 2130) may be used for one or more of these functions. The external memory may be the memory 2120 and/or the storage device 2140, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 2100 may be provided through various input devices as indicated in block 2190. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 2190 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 2100 to other electronic devices across USB and/or HDMI connections. It is to be understood that various aspects of input processing, for example, Reed-Solomon error correction, may be implemented, for example, within a separate input processing IC or within processor 2110 as necessary. Similarly, aspects of USB or HDMI interface processing may be implemented within separate interface ICs or within processor 2110 as necessary. The demodulated, error corrected, and demultiplexed stream may be provided to various processing elements, including, for example, processor 2110, and encoder/decoder 2130 operating in combination with the memory and storage elements to process the data stream as necessary for presentation on an output device.

Various elements of system 2100 may be provided within an integrated housing. Within the integrated housing, the various elements may be interconnected and transmit data therebetween using suitable connection arrangement 2190, for example, an internal bus as known in the art, including the I2C bus, wiring, and printed circuit boards.

The system 2100 may include communication interface 2150 that enables communication with other devices via communication channel 2151. The communication interface 2150 may include, but is not limited to, a transceiver configured to transmit and to receive data over communication channel 2151. The communication interface 2150 may include, but is not limited to, a modem or network card and the communication channel 2151 may be implemented, for example, within a wired and/or a wireless medium.

Data may be streamed to system 2100, in various exemplary embodiments, using a Wi-Fi network such as IEEE 802.11. The Wi-Fi signal of these exemplary embodiments may be received over the communications channel 2151 and the communications interface 2150 which are adapted for Wi-Fi communications. The communications channel 2151 of these exemplary embodiments may be typically connected to an access point or router that provides access to outside networks including the Internet for allowing streaming applications and other over-the-top communications.

Other exemplary embodiments may provide streamed data to the system 2100 using a set-top box that delivers the data over the HDMI connection of the input block 2190.

Still other exemplary embodiments may provide streamed data to the system 2100 using the RF connection of the input block 2190.

The streamed data may be used as a way for signaling information used by the system 2100. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 2100 may provide an output signal to various output devices, including a display 2161, speakers 2171, and other peripheral devices 2181. The other peripheral devices 2181 may include, in various examples of exemplary embodiments, one or more of a stand-alone DVR, a disk player, a stereo system, a lighting system, and other devices that provide a function based on the output of system 2100.

In various exemplary embodiments, control signals may be communicated between the system 2100 and the display 2161, speakers 2171, or other peripheral devices 2181 using signaling such as AV.Link (Audio/Video Link), CEC (Consumer Electronics Control), or other communications protocols that enable device-to-device control with or without user intervention.

The output devices may be communicatively coupled to system 2100 via dedicated connections through respective interfaces 2160, 2170, and 2180.

Alternatively, the output devices may be connected to system 2100 using the communications channel 2151 via the communications interface 2150. The display 2161 and speakers 2171 may be integrated in a single unit with the other components of system 2100 in an electronic device such as, for example, a television.

In various exemplary embodiments, the display interface 2160 may include a display driver, such as, for example, a timing controller (T Con) chip.

The display 2161 and speaker 2171 may alternatively be separate from one or more of the other components, for example, if the RF portion of input 2190 is part of a separate set-top box. In various exemplary embodiments in which the display 2161 and speakers 2171 may be external components, the output signal may be provided via dedicated output connections, including, for example, HDMI ports, USB ports, or COMP outputs.

In **Figures 1-20,** various methods are described herein, and each of the methods includes one or more blocks or actions for achieving the described method. Unless a specific order of blocks or actions is required for proper operation of the method, the order and/or use of specific blocks and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 2110 or by hardware, or by a combination of hardware and software. As a non-limiting example, the exemplary embodiments may be also implemented by one or more integrated circuits. The memory 2120 may be of any type appropriate to the technical environment and may be implemented using any appropriate data storage technology, such as optical memory devices, magnetic memory devices, semiconductor-based memory devices, fixed memory, and removable memory, as non-limiting examples. The processor 2110 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, blocks, operations, elements, and/or components but do not preclude the presence or addition of one or more other features, integers, blocks, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of calculating at least one regular intra prediction mode for coding at least one future block of a current block of a video picture, comprising:

   - obtaining reconstructed block of the current block; and
   - determining a list of the at least one regular intra-prediction mode, called a second list of at least one recalculated RIPM, based on the reconstructed block.

2. A method of calculating at least one regular intra prediction mode for decoding at least one future block of a current block of a video picture, comprising:

   - obtaining reconstructed block of the current block; and
   - determining a list of the at least one regular intra-prediction mode, called a second list of at least one recalculated RIPM, based on the reconstructed block.

3. The method of claim 1 or 2, wherein the determining the second list of the at least one recalculated RIPM comprises:

   - defining (1810) a first list of RIPMs for the reconstructed block;

- testing (1820) each current RIPM of the first list of RIPMs by:

- obtaining (1821) a prediction block by predicting the reconstructed block based on the current RIPM;
- calculating (1822) a distortion cost associated with the current RIPM based on the reconstructed block and a prediction block obtained for the current RIPM;

- sorting (1830) the first list of RIPMs based on the distortion costs associated with the RIPMs of the first RIPMs; and
- obtaining (1840) the second list of the at least one recalculated RIPM by selecting at least one first RIPM from the sorted first list of RIPMs.

4. The method of claim 3, wherein the first list of RIPMs comprises a subset of RIPMs of all RIPMs that could be used for predicting the current block.

5. The method of claim 4, wherein the subset of RIPMs depends on one characteristic of the current block.

6. The method of claim 5, wherein the current block being predicted using at least one RIPM and wherein the subset of RIPMs includes said at least one RIPM and surrounding, in terms of mode index, RIPMs of each of said at least one RIPM, each surrounding RIPM of each RIPM being identified by an index equal to a sum of an index identifying said RIPM and an offset value.

7. The method of claim 4, wherein the subset of RIPMs depend on texture information extracted from the reconstructed block and of all the RIPMs that could be used for predicting the current block.

8. The method of claim 4, wherein the first list of RIPMs depends on residual energy of the current block that depends on a residual block calculated by subtracting a prediction block corresponding to one RIPM used for predicting the current block, from the signal of the current block.

9. The method of claim 8, wherein the residual energy of the current block is computed in the pixel-domain or the transform-domain.

10. The method of claim 9 or 10, wherein if the residual energy of the current block is smaller than a threshold or if the transform coefficients associated with the residual block of a current block are smaller than a threshold, obtaining the second list of at the least one recalculated RIPM for that current block is skipped.

11. The method of claim 8, wherein the number of RIPMs in the first list of RIPMs depends on the residual energy of the current block.

12. The method of one of previous claims, wherein the second list of the at least one RIPM is obtained based on maximum difference between maximum and minimum distortion costs associated with the at least one recalculated RIPM.

13. The method of one previous claims, wherein a maximum number of recalculated RIPMs in the second list of the at least one recalculated RIPM is fixed or depends on one characteristic of the current block.

14. The method of one of claims 6, wherein testing or not testing the surrounding RIPMs of a current RIPM of the first list of RIPMs depends on a comparison between the distortion cost associated with the current RIPM and a minimum distortion cost associated with a recalculated RIPM of the second list of the at least one recalculated RIPM.

15. The method of one of previous claims, wherein the reconstructed block is resampled or sub-sampled and testing (1820) a current RIPM of the first list of RIPMs is based on resampled or sub-sampled reconstructed block.

16. The method of claim 15, wherein testing (1820) a current RIPM of the first list of RIPMs is based on a subset of samples of the reconstructed block.

17. The method of one of previous claims, wherein one future block of the current block is coded or decoded based on one Occurrence-based Intra Coding mode , called OBIC mode, determining an occurrence list of RIPMs, each RIPM being associated with an occurrence weight representing use frequency of said RIPM for coding or decoding at least one neighboring block in a causal neighborhood of the future block.

18. The method of claim 17, wherein the occurrence list comprise RIPMs calculated from the future block and/or the at least one recalculated RIPMs of the second list of the at least one recalculated RIPM.

19. The method of claim 18, wherein deciding whether or not the occurrence list comprise the at least one recalculated RIPMs of the second list of the at least one recalculated RIPM depends on characteristic of the future block or distances, in terms of number of pixel, of the neighboring blocks to the future block.

20. The method of claim 17, wherein when a first value of an indicator indicates a first OBIC mode using the at least one recalculated RIPMs of the second list of the at least one recalculated RIPM, a second value of the indicator indicates a second OBIC mode using RIPMs calculated from the future block and a third value of the indicator indicates a third OBIC mode using both the at least one recalculated RIPMs of the second list of the at least one recalculated RIPM and the RIPMs calculated from the future block, then the indicator is signaled in a bitstream and the decoder determines associations between the indicator value signaled and the three OBIC modes based on a template cost calculated for each OBIC mode .

21. An apparatus comprising means for performing one of the methods claimed in any one of claims 1 to 20.

22. A computer program product including instructions which, when the program is executed by one or more processors, causes the one or more processors to carry out a method claimed in any one of claims 1 to 20.

23. A non-transitory storage medium carrying instructions of program code for executing a method claimed in any one of claims 1 to 20.

**Fig. 1**

NxN      2Nx2N      Nx2N      2NxN

nLx2N      nLx2N      2NxnU      2NxnD

**Fig. 2**

# Fig. 3

# Fig. 4

SBTV  SBTH  STTV  STTH

**Fig. 5**

200

**Fig. 6**

**Fig. 7**

**Fig. 8**

# Fig. 9

| Intra pred. mode | -14 | -13 | -12 | -11 | -10 | -9 | -8 | -7 | -6 | -5 | -4 | -3 | -2 | -1 | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|---|---|---|---|---|---|---|---|---|---|---|---|---|
| LFNST set index | 2 | 2 | 2 | 2 | 2 | 2 | 2 | 2 | 2 | 2 | 2 | 2 | 2 | 2 | 0 | 1 | 2 | 3 | 4 | 5 | 6 | 7 | 8 | 9 | 10 | 11 | 12 | 13 | 14 | 15 | 16 | 17 |
| Intra pred. mode | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 |
| LFNST set index | 18 | 19 | 20 | 21 | 22 | 23 | 24 | 25 | 26 | 27 | 28 | 29 | 30 | 31 | 32 | 33 | 34 | 33 | 32 | 31 | 30 | 29 | 28 | 27 | 26 | 25 | 24 | 23 | 22 | 21 | 20 | 19 |
| Intra pred. mode | 50 | 51 | 52 | 53 | 54 | 55 | 56 | 57 | 58 | 59 | 60 | 61 | 62 | 63 | 64 | 65 | 66 | 67 | 68 | 69 | 70 | 71 | 72 | 73 | 74 | 75 | 76 | 77 | 78 | 79 | 80 | |
| LFNST set index | 18 | 17 | 16 | 15 | 14 | 13 | 12 | 11 | 10 | 9 | 8 | 7 | 6 | 5 | 4 | 3 | 2 | 2 | 2 | 2 | 2 | 2 | 2 | 2 | 2 | 2 | 2 | 2 | 2 | 2 | 2 | |

4xN/Nx4 ≥ 4
- 4x4 → NSPT4x4
- 4x8 → NSPT4x8
- 8x4 → NSPT8x4
- 4x16 → NSPT4x16
- 16x4 → NSPT16x4
- else → DCT-II+LFNST4

8xN/Nx8 ≥ 8
- 8x8 → NSPT8x8
- 8x16 → NSPT8x16
- 16x8 → NSPT16x8
- else → DCT-II+LFNST8

MxN (M,N ≥ 16) → DCT-II+LFNST16

# Fig. 10

|  0 |  1 |  2 |  3 |
|----|----|----|----|
|  4 |  5 |  6 |  7 |
|  8 |  9 | 10 | 11 |
| 12 | 13 | 14 | 15 |

| 0 | 4 | 1 | 8 | 5 | 2 | 12 | 9 | 6 | 3 | 13 | 10 | 7 | 14 | 11 | 15 |
|---|---|---|---|---|---|----|---|---|---|----|----|---|----|----|----|

**Fig. 11**

**Matrix-Vector Multiplication** → **MIP prediction upsampling**

**DIMD derivation**

amplitude

Intraprediction Mode

# Fig. 12

Causal neighborhood
Tile border
Current block
Eligible neighbor
Non-Eligible neighbor

**Fig. 13**

| $\langle id1, cw1\rangle$ | $\langle id2, cw2\rangle$ | $\langle id3, cw3\rangle$ | $\langle id4, cw4\rangle$ | ... | $\langle idN, cwN\rangle$ |

**Fig. 14**

**Fig. 15**

300

1620    1610

DPB

**Fig. 16**

400

1720    1710

DPB

**Fig. 17**

**Fig. 18**

## Fig. 19

## Fig. 20

**Fig. 21**

**EUROPEAN SEARCH REPORT**

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/217019 A1 (TENG CHIH-YU [TW] ET AL) 6 July 2023 (2023-07-06) * [0002], [0005]-[0011], [0014], [0015], [0055], [0063], [0064], [0066]-[0068], [0070]-[0085], [0089], [0090], [0095], [0096], [0098], [0100], [0123]-[0128] * * figures 3-5 * | 1-16, 21-23 | INV.<br>H04N19/11<br>H04N19/147<br>H04N19/593 |
| | ----- | | |
| X | CAO (QUALCOMM) K ET AL: "EE2-related: Template based intra most probable modes sorting", 23. JVET MEETING; 20210707 - 20210716; TELECONFERENCE; (THE JOINT VIDEO EXPLORATION TEAM OF ISO/IEC JTC1/SC29/WG11 AND ITU-T SG.16 ), , no. JVET-W0124 ; m57241 9 July 2021 (2021-07-09), XP030296129, Retrieved from the Internet: URL:https://jvet-experts.org/doc_end_user/documents/23_Teleconference/wg11/JVET-W0124-v2.zip JVET-W0124-v2/JVET-W0124-v2.docx [retrieved on 2021-07-09] * abstract * * section 2 * * figure 1 * | 1-4, 21-23 | |
| | ----- | | TECHNICAL FIELDS SEARCHED (IPC) |
| | -/-- | | H04N |

The present search report has been drawn up for all claims

| Place of search | Date of completion of the search | Examiner |
|---|---|---|
| The Hague | 3 March 2025 | La, Valérie |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 30 6288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU (OPPO) L ET AL: "EE2-1.10: Template-based multiple reference line intra prediction", 28. JVET MEETING; 20221021 - 20221028; MAINZ; (THE JOINT VIDEO EXPLORATION TEAM OF ISO/IEC JTC1/SC29/WG11 AND ITU-T SG.16 ), , no. JVET-AB0156 ; m60940 14 October 2022 (2022-10-14), XP030304707, Retrieved from the Internet: URL:https://jvet-experts.org/doc_end_user/documents/28_Mainz/wg11/JVET-AB0156-v1.zip JVET-AB0156-v1.docx [retrieved on 2022-10-14] * abstract * * a) and b) of section 1 * * figure 1 * ----- | 1-4, 21-23 | |

TECHNICAL FIELDS
SEARCHED      (IPC)

The present search report has been drawn up for all claims

| Place of search | Date of completion of the search | Examiner |
|---|---|---|
| The Hague | 3 March 2025 | La, Valérie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................................

& : member of the same patent family, corresponding
    document

EPO FORM 1503 03.82 (P04C01)

page 2 of 2

Europäisches
Patentamt

European
Patent Office

Office européen
des brevets

**Application Number**

EP 24 30 6288

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-16, 21-23

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**

**SHEET B**

**Application Number**

EP 24 30 6288

The Search Division considers that the present European patent application does not comply with the requirements of unity of invention and relates to several inventions or groups of inventions, namely:

1. claims: 1-16, 21-23

   A method of calculating at least one regular intra prediction mode for coding at least one future block of a current block of a video picture, comprising:
   - obtaining reconstructed block of the current block; and
   - determining a list of the at least one regular intra-prediction mode, called a second list of at least one recalculated RIPM, based on the reconstructed block, wherein the determining the second list of the at least one recalculated RIPM comprises:
   - defining (1810) a first list of RIPMs for the reconstructed block;
   - testing (1820) each current RIPM of the first list of RIPMs by:
       - obtaining (1821) a prediction block by predicting the reconstructed block based on the current RIPM;
       - calculating (1822) a distortion cost associated with the current RIPM basedon the reconstructed block and a prediction block obtained for the current RIPM;
   - sorting (1830) the first list of RIPMs based on the distortion costs associatedwith the RIPMs of the first RIPMs; and
   - obtaining (1840) the second list of the at least one recalculated RIPM by selecting at least one first RIPM from the sorted first list of RIPMs.
   ---

2. claims: 17-20

   A method of calculating at least one regular intra prediction mode for coding at least one future block of a current block of a video picture, comprising:
   - obtaining reconstructed block of the current block; and
   - determining a list of the at least one regular intra-prediction mode, called a second list of at least one recalculated RIPM, based on the reconstructed block, wherein one future block of the current block is coded or decoded based on one Occurrence-based IntraCoding mode, called OBIC mode, determining an occurrence list of RIPMs, each RIPM being associated with an occurrence weight representing use frequency of said RIPM for coding or decoding at least one neighboring block in a causal neighborhood of the future block.
   ---

## ANNEX TO THE EUROPEAN SEARCH REPORT
## ON EUROPEAN PATENT APPLICATION NO.

EP 24 30 6288

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | Publication date |
|---|---|---|---|
| US 2023217019 A1 | 06-07-2023 | CN 116405695 A | 07-07-2023 |
| | | EP 4207758 A1 | 05-07-2023 |
| | | US 2023217019 A1 | 06-07-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L. XU et al.** EE2-1.14: An extrapolation filter-based intra prediction mode. *33rd JVET meeting (online)*